(19) Europäisches Patentamt
European Patent Office
Office européen des brevets

(11) **EP 4 266 430 A1**

(12) **EUROPEAN PATENT APPLICATION**
published in accordance with Art. 153(4) EPC

(43) Date of publication:
**25.10.2023 Bulletin 2023/43**

(21) Application number: **21906662.8**

(22) Date of filing: **15.12.2021**

(51) International Patent Classification (IPC):
**H01M 4/70** (2006.01)  **H01M 10/0562** (2010.01)
**H01M 10/0585** (2010.01)

(52) Cooperative Patent Classification (CPC):
**H01M 4/70; H01M 10/0562; H01M 10/0585;**
Y02P 70/50

(86) International application number:
**PCT/JP2021/046318**

(87) International publication number:
**WO 2022/131301 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.12.2020   JP 2020207743
10.03.2021   JP 2021038434**

(71) Applicants:
• **TOYOTA JIDOSHA KABUSHIKI KAISHA
Toyota-shi
Aichi 471-8571 (JP)**

• **Panasonic Holdings Corporation
Osaka 571-8501 (JP)**

(72) Inventors:
• **KAWASHIMA, Shohei
Toyota-shi, Aichi 471-8571 (JP)**
• **ITO, Yusuke
Kadoma-shi, Osaka 571-8501 (JP)**

(74) Representative: **J A Kemp LLP
80 Turnmill Street
London EC1M 5QU (GB)**

(54) **SOLID BATTERY AND MANUFACTURING METHOD FOR SOLID BATTERY**

(57)    In a solid-state battery that includes a stack including a cathode layer, a solid electrolyte layer, and an anode layer, the proportion of voids in the anode layer in a stacking direction, in all voids in the anode layer is more than 36vol%; or a method of producing a solid-state battery includes: performing initial charging in which a constraining pressure for the stack at the beginning of the charging is at least 30 MPa, and a constraining pressure for the stack at the end of the charging is at least 40 MPa.

Fig. 1

S10

START

S11    Preparing step

S12    Initial charging step

END

EP 4 266 430 A1

**Description**

[Technical Field]

The present application relates to a solid-state battery.

[Background]

When an all-solid-state battery is conventionally produced, the battery is assembled, and thereafter, charged. There is the technique of, at such a time, charging the battery while applying a predetermined pressure to the battery in view of improving battery performance.

For example, patent literature 1 discloses the technique of applying a constraining pressure of 0.1 MPa to 10 MPa in the step of constant voltage charging for an all-solid-state battery in view of improving cycle characteristics. Patent literature 2 discloses the technique of charging a battery stack at an initial charging voltage while constraining the stack at a constant pressure in the stacking direction of the layers constituting unit cells in view of suppressing the deterioration and improving the energy density of all-solid-state batteries. Patent literature 3 discloses the technique of hermetically sealing a bag-like container containing a battery laminate therein, and thereafter, performing pre-charge-discharge under a predetermined pressure at least once in view of improving the state of the solid/solid interfaces that are in contact with each other to improve the charge and discharge performance under the atmospheric pressure.

[Citation List]

[Patent Literature]

   Patent Literature 1: JP 2016-81790 A
   Patent Literature 2: JP 2020-107389 A
   Patent Literature 3: JP 2010-272210 A

[Summary]

[Technical Problem]

The inventors found out that a low constraining pressure for a solid-state battery that includes an anode layer using an alloy-based anode active material in an initial charging step does not promote the melt adhesion of the anode active material, which causes the amount of increase in the resistance increase rate due to charge and discharge in actual use to be extremely large.

An object of the present disclosure is to provide a solid-state battery capable of suppressing a rise in the resistance increase rate. Another object of the present disclosure is to provide a method of producing a solid-state battery.

[Solution to Problem]

As one measure to solve the problem, the present application discloses a solid-state battery that includes a stack including a cathode layer, a solid electrolyte layer, and an anode layer containing an alloy-based anode active material, wherein a proportion of voids in the anode layer in a stacking direction, in all voids in the anode layer is more than 36vol%.

In the solid-state battery, the proportion of the voids in the stacking direction, in all the voids may be 55vol% to 100vol%.

In the solid-state battery, the alloy-based anode active material may contain silicon.

In the solid-state battery, the silicon may be a particle.

In the solid-state battery, the particle of the silicon can have a particle diameter D50 of at most 1 $\mu$m.

In the solid-state battery, the silicon may be a thin film.

In the solid-state battery, the solid electrolyte layer may contain a sulfide solid electrolyte.

In the solid-state battery, the anode layer may further include an anode current collector, and the anode current collector may have surface roughness Rz of 0.8 $\mu$m to 4.0 $\mu$m.

As one measure to solve the problem, the present application is provided with a method of producing a solid-state battery, the method comprising: preparing a stack including a cathode layer, a solid electrolyte layer, and an anode layer; and performing initial charging in which the stack is constrained in a stacking direction, and the constrained stack is subjected to initial constant current/constant voltage charging, wherein in said performing initial charging, a constraining pressure for the stack at a beginning of the charging is at least 30 MPa, and a constraining pressure for the stack at an end of the charging is at least 40 MPa.

In the method, after said performing initial charging, the stack may be constrained at a constraining pressure of at most 10 MPa.

In the method, the anode layer may contain an alloy-based anode active material, and the alloy-based anode active material may contain silicon.

In the method, the silicon may be a particle.

In the method, the particle of the silicon can have a particle diameter D50 of at most 1 μm.

In the method, the silicon may be a thin film.

In the method, the solid electrolyte layer may contain a sulfide solid electrolyte.

In the method, the anode layer may further include an anode current collector, and the anode current collector may have surface roughness Rz of 0.8 μm to 4.0 μm.

[Advantageous Effect]

The present disclosure can be provided with a solid-state battery capable of suppressing a rise in the resistance increase rate.

[Brief Description of Drawings]

[Fig. 1]

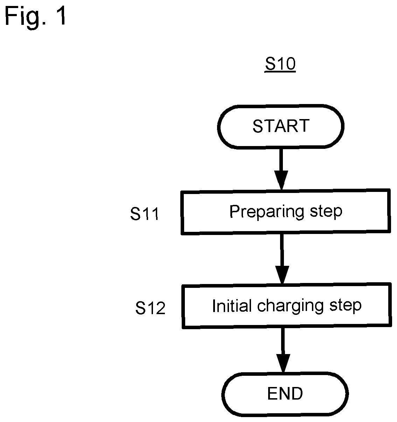

Fig. 1 is a flowchart of a producing method S10.
[Fig. 2]

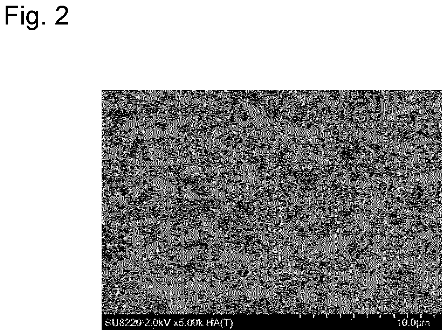

Fig. 2 is a cross-sectional image of an anode layer including an anode mixture layer (test A1).
[Fig. 3]

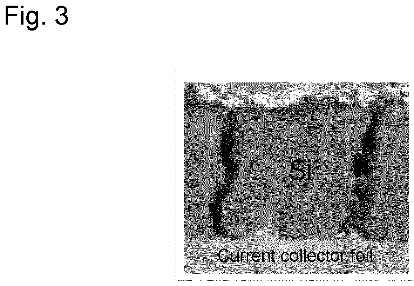

Fig. 3 is a cross-sectional image of an anode layer including an anode thin film layer (test A7).
[Fig. 4]

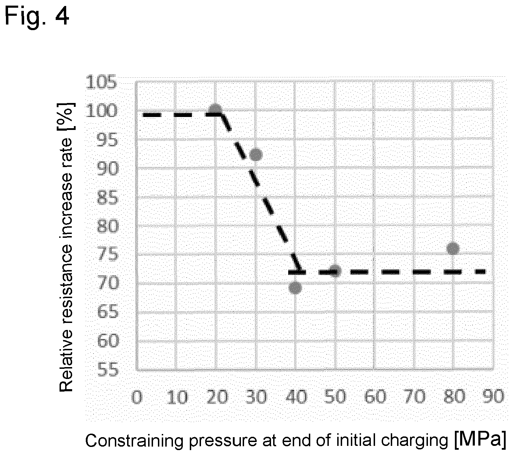

Fig. 4 shows the relation between the constraining pressure at the end of the initial charging, and the relative resistance increase rate, concerning tests A1 to A3, B1 and B2.
[Fig. 5]

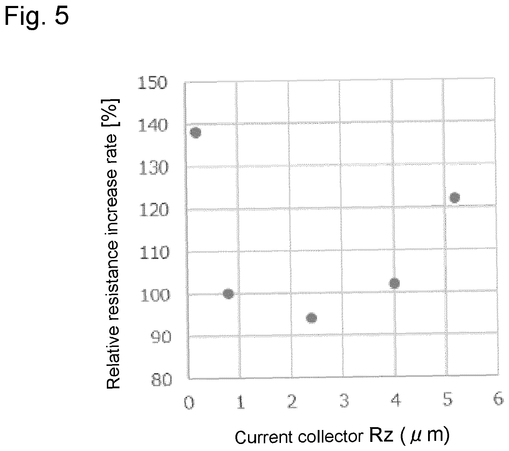

Fig. 5 shows the relation between Rz and the relative resistance increase rate, concerning tests A11 to A13, B11 and B12.

[Description of Embodiments]

1. Method of Producing Solid-State Battery

A method of producing a solid-state battery according to the present disclosure will be described with reference to a method S10 of producing an all-solid-state battery according to one embodiment (hereinafter may be simply referred to as "producing method S10"). Here, the solid-state battery means the battery containing a solid electrolyte; and the all-solid-state battery means the solid-state battery containing no solution-based material. Fig. 1 shows a flow chart of the producing method S10. As in Fig. 1, the producing method S10 includes a preparing step S11 and an initial charging step S12. Hereinafter, each of the steps will be described.

1.1. Preparing Step S11

The preparing step S11 is the step of preparing a stack that is formed by stacking a cathode layer, a solid electrolyte layer, and an anode layer containing an alloy-based anode active material in this order.

1.1.1. Cathode Layer

The cathode layer includes a cathode mixture layer. The cathode layer may be provided with a cathode current collector on a side opposite to the side where the solid electrolyte layer is to be stacked.

The cathode mixture layer contains a cathode active material. This cathode active material is not particularly limited as long as usable for all-solid-state lithium ion batteries. Examples of the cathode active material include lithium cobaltate, lithium nickel cobalt aluminum oxide (NCA-based active materials), $LiNi_{1/3}Co_{1/3}Mn_{1/3}O_2$, lithium manganate, and spinel lithium compounds. Among them, lithium nickelate is preferably used as the cathode active material. The particle diameter of the cathode active material is not particularly limited, and is, for example, in the range of 5 $\mu$m and 50 $\mu$m. The content of the cathode active material in the cathode mixture layer is, for example, in the range of 50wt% and 99wt%. The surface of the cathode active material may be coated with an oxide layer such as a lithium niobate layer, a lithium titanate layer, and a lithium phosphate layer.

Here, in this specification, "particle diameter" means the particle diameter at the 50% integrated value (D50) in the volume-based particle diameter distribution that is measured using a laser diffraction and scattering method.

The cathode mixture layer may optionally contain a solid electrolyte. Examples of this solid electrolyte include oxide solid electrolytes and sulfide solid electrolytes; and preferred examples thereof include sulfide solid electrolytes.

Examples of oxide solid electrolytes here include $Li_7La_3Zr_2O_{12}$, $Li_{7-x}La_3Zr_{1-x}Nb_xO_{12}$, $Li_{7-3x}La_3Zr_2Al_xO_{12}$, $Li_{3x}La_{2/3-x}TiO_3$, $Li_{1+x}Al_xTi_{2-x}(PO_4)_3$, $Li_{1+x}Al_xGe_{2-x}(PO_4)_3$, $Li_3PO_4$, and $Li_{3+x}PO_{4-x}N_x$ (LiPON).

Examples of sulfide solid electrolytes here include $Li_3PS_4$, $Li_2S\text{-}P_2S_5$, $Li_2S\text{-}SiS_2$, $LiI\text{-}Li_2S\text{-}SiS_2$, $LiI\text{-}Si_2S\text{-}P_2S_5$, $Li_2S\text{-}P_2S_5\text{-}LiI\text{-}LiBr$, $LiI\text{-}Li_2S\text{-}P_2S_5$, $LiI\text{-}Li_2S\text{-}P_2O_5$, $LiI\text{-}Li_3PO_4\text{-}P_2S_5$, and $Li_2S\text{-}P_2S_5\text{-}GeS_2$.

The content of the solid electrolyte in the cathode mixture layer is not particularly limited, and is, for example, in the range of 1wt% and 50wt%.

The cathode mixture layer may optionally contain a conductive additive. Examples of this conductive additive include: carbon materials such as acetylene black, Ketjenblack, and vapor grown carbon fiber (VGCF); and metallic materials such as nickel, aluminum, and stainless steel. The content of the conductive additive in the cathode mixture layer is not particularly limited, and is, for example, in the range of 0.1wt% and 10wt%.

The cathode mixture layer may optionally contain a binder (binding material). Examples of this binder include butadiene rubber (BR), butyl rubber (IIR), acrylate-butadiene rubber (ABR), polyvinylidene fluoride (PVdF), and polyvinylidene fluoride-hexafluoropropylene copolymer (PVDF-HFP). The content of the binder in the cathode mixture layer is not particularly limited, and is, for example, in the range of 0.1wt% and 10wt%.

The thickness of the cathode mixture layer is not particularly limited, and may be set appropriately according to the desired battery performance. For example, this thickness is in the range of 0.1 $\mu$m and 1 mm.

The cathode current collector is arranged on the cathode mixture layer on a side opposite to the side where the solid electrolyte layer is to be stacked. The material of the cathode current collector is not particularly limited, and can be appropriately selected from known materials according to the purpose. Examples of this material include Cu, Ni, Cr, Au, Pt, Ag, Al, Fe, Ti, Zn, Co, and stainless steel. The thickness of the cathode current collector is not particularly limited, and may be appropriately set according to the desired battery performance. For example, this thickness is in the range of 0.1 $\mu$m and 1 mm.

The cathode layer can be produced by a known method without any particular limitations. For example, the cathode layer can be produced by mixing materials to constitute the cathode mixture layer with a solvent to form a slurry, applying the slurry to a substrate or the cathode current collector, and drying the resultant.

1.1.2. Solid Electrolyte Layer

The solid electrolyte layer contains a solid electrolyte. As this solid electrolyte, the solid electrolyte same as that used for the cathode layer can be used. The solid electrolyte layer may contain, for example, a sulfide solid electrolyte. Sulfide solid electrolytes are relatively soft, and tend to absorb volume changes when the anode structure is constructed in initial activation. The content of the solid electrolyte in the solid electrolyte layer is, for example, in the range of 50wt% and 99wt%.

The solid electrolyte layer may optionally contain a binder (binding material). As this binder, the binder same as that used for the cathode layer can be used. The content of the binder in the solid electrolyte layer is not particularly limited, and is, for example, in the range of 0.1wt% and 10wt%.

The solid electrolyte layer can be produced by a known method without any particular limitations. For example, the solid electrolyte layer can be produced by mixing materials to constitute the solid electrolyte layer with a solvent to form a slurry, applying the slurry to a substrate, and drying the resultant.

1.1.3. Anode Layer

The anode layer includes an anode mixture layer or an anode thin film layer. The anode layer may be provided with an anode current collector on a side opposite to the side where the solid electrolyte layer is to be stacked.

The anode mixture layer contains an alloy-based anode active material. This alloy-based anode active material is a metallic element bondable to Li: specific examples thereof include Si, Sn, Al, Mg, C, Al, Ge, Sb, In, Cu, Mn, and oxides of any of them; preferred examples thereof include Si and Sn, and oxides of any of them; and more preferred examples thereof include Si and Si oxides. The anode active material is preferably in the form of particle, and in this case, further preferably, the particle diameter is at most 1 $\mu$m. The smaller the particle diameter of the anode active material is, the more the inert interfaces in the anode mixture layer (interfaces between the particles of the anode active material) is, and, meanwhile, the less the inert interfaces are because of the melt adhesion of the particles of the anode active material which is caused by charging. This effect of reducing the inert interfaces is remarkably large when the particle diameter of the anode active material is at most 1 $\mu$m, which can result in a suppressed rise in the resistance increase rate. The content of the anode active material in the anode mixture layer is, for example, in the range of 30wt% and 90wt%.

The anode mixture layer may optionally contain a solid electrolyte. As this solid electrolyte, the solid electrolyte same as that used for the cathode layer can be used. The content of the solid electrolyte in the anode mixture layer is not particularly limited, and is, for example, in the range of 10wt% and 70wt%.

The anode mixture layer may optionally contain a conductive additive. As this conductive additive, the conductive additive same as that used for the cathode layer can be used. The content of the conductive additive in the anode mixture layer is not particularly limited, and is, for example, in the range of 0.1wt% and 20wt%.

The anode mixture layer may optionally contain a binder (binding material). As this binder, the binder same as that used for the cathode layer can be used. The content of the binder in the anode mixture layer is not particularly limited, and is, for example, in the range of 0.1wt% and 10wt%.

The thickness of the anode mixture layer is not particularly limited, and may be set appropriately according to the desired battery performance. For example, this thickness is in the range of 0.1 $\mu$m and 1 mm.

The anode thin film layer is the thin film containing an alloy-based anode active material. The content of this alloy-based anode active material in the anode thin film layer is preferably at least 90wt%, more preferably at least 95wt%, and particularly preferably 100wt% (which means that the anode thin film layer is formed from the alloy-based anode active material). As the alloy-based anode active material, any of the aforementioned alloy-based anode active materials can be used. The thickness of the anode thin film layer is not particularly limited, and is, for example, in the range of 1 $\mu$m and 10 $\mu$m. The lower limit of this thickness is 1 $\mu$m in view of securing energy density. The upper limit of this thickness is 10 $\mu$m in view of the battery performance and the expansion coefficient from charge and discharge.

The anode current collector is the member arranged on the anode mixture layer or the anode thin film layer on a side opposite to the side where the solid electrolyte layer is to be stacked. The material to constitute the anode current collector can be appropriately selected from known materials according to the purpose. Examples of this material include Cu, Ni, Cr, Au, Pt, Ag, Al, Fe, Ti, Zn, Co, and stainless steel. The thickness of the anode current collector is not particularly limited, and may be appropriately set according to the desired battery performance. For example, this thickness is in the range of 0.1 $\mu$m and 1 mm.

The surface roughness of the anode current collector at least on the side in contact with the anode mixture layer or the anode thin film layer is preferably 0.8 $\mu$m to 4.0 $\mu$m in terms of the maximum height Rz in JIS B 0601:2013 (ISO 4287:1997). This improves, as described later, the adhesiveness of the anode current collector and either the anode mixture layer or the anode thin film layer to each other to suppress, by means of the strength of the anode current collector, the planar expansion. This can promote the melt adhesion of the anode active material to suppress the resistance increase rate.

The anode layer can be produced by a known method without any particular limitations.

For example, the anode layer including the anode mixture layer can be produced by mixing materials to constitute the anode mixture layer with a solvent to form a slurry, applying the slurry to a substrate or the anode current collector, and drying the resultant.

For example, the anode layer including the anode thin film layer can be produced by sputtering a substrate or the anode current collector with the anode active material. The sputtering conditions can be appropriately set according to, for example, the thickness of the anode thin film layer.

1.1.4. Stack

The stack is the stack formed by stacking the cathode layer, the solid electrolyte layer, and the anode layer containing the alloy-based active material in this order. In the stack, the capacity ratio of the anode layer to the cathode layer is preferably at most 5. "Capacity ratio" is a value calculated from theoretical capacity (mAh) of the anode layer/theoretical capacity (mAh) of the cathode layer.

Li is intercalated into the anode active material in charging, and thereby, the softness of the anode active material changes. In the stack, the capacity ratio of the anode layer to the cathode layer of at most 5 allows the anode active material to be adjusted to be soft enough to easily lead to the melt adhesion of the particles of the anode active material to each other in charging.

A known method can be employed as the method of stacking the cathode layer, the solid electrolyte layer, and the anode layer without any particular limitations. For example, the stack can be prepared by: separately preparing the cathode layer, the solid electrolyte layer, and the anode layer; pressing at a predetermined pressure to stack the cathode layer and the solid electrolyte layer; and further pressing at a predetermined pressure to stack the anode layer onto the solid electrolyte layer on the side opposite to the cathode layer. The stack can be also prepared by: separately preparing slurries to constitute the cathode layer, the solid electrolyte layer, and the anode layer, respectively; stacking the cathode layer, the solid electrolyte layer, and the anode layer in this order; and drying the resultant.

1.2. Initial Charging Step S12

The initial charging step S12 is the step that is carried out after the preparing step S11. In the initial charging step S12, the stack prepared in the preparing step S11 is constrained in the stacking direction, and initial constant current/constant voltage charging of the battery is carried out. In the initial charging step S12, the constraining pressure for the stack at the beginning of the charging is at least 30 MPa, and the constraining pressure at the end of the charging is at least 40 MPa.

It is noted that in normal use, in view of the handleability of all-solid-state batteries, it is difficult to raise the constraining pressure for a stack to that in the initial charging step S12.

The conditions for the initial constant current/constant voltage charging are not particularly limited, and may be the same as conventional conditions. That is, the conditions may be appropriately set according to the battery performance of the stack.

At least 30 MPa is enough, and at least 40 MPa is preferable for the constraining pressure for the stack at the beginning of the charging. This constraining pressure may be at most 70 MPa in view of the durability of the stack. At least 40 MPa is enough, and at least 50 MPa is preferable for the constraining pressure for the stack at the end of the charging. This constraining pressure may be at most 80 MPa in view of the durability of the stack. Here, Li is intercalated into the anode active material by the charging, and thereby, the anode active material expands. Thus, the constraining pressure is higher at the end of the charging than that at the beginning of the charging. Therefore, it is prerequisite for the constraining pressure for the stack at the end of the charging to be higher than that at the beginning of the charging.

1.3. Effect etc.

The method of producing an all-solid-state battery according to the present disclosure has been described with reference to the producing method S10. In the method of producing an all-solid-state battery according to the present disclosure, the initial charging is performed while a higher constraining pressure than that in normal use is applied to the stack in the initial charging step; thereby, the rise in the resistance increase rate of the all-solid-state battery produced using this stack can be suppressed.

More specifically, the initial charging performed under the conditions that the constraining pressure at the beginning of the charging should be at least 30 MPa, and the constraining pressure at the end of the charging should be at least 40 MPa can lead to a drop in the relative resistance increase rate, that is, the suppression of the deterioration of the battery stack due to long-term use.

For dropping the relative resistance increase rate, it is necessary to promote the melt adhesion of the particles of the anode active material to each other. For promoting the melt adhesion of the particles of the anode active material to each other, it is important to grow the active material in the thickness direction where the constraining pressure is applied. The promoted melt adhesion of the anode active material reduces the inert interfaces (interfaces between the particles of the anode active material), which causes the anode active material in the anode layer to rearrange itself. This causes voids that are generated in the anode layer when the anode active material contracts (e.g., in discharging) to tend to be generated in the stacking direction. The voids in the stacking direction are difficult to block electron paths or ion paths. Accordingly, the initial charging step can result in controlled arrangement of the voids generated in the anode layer, and as a result, a rise in the resistance increase rate can be suppressed.

The surface roughness of the anode current collector within a predetermined range, that is, the surface roughness Rz of the anode current collector of 0.8 $\mu$m to 4.0 $\mu$m makes the foregoing effect more remarkable.

For concentrating the expansion/contraction of the alloy-based active material, which is caused by the Li intercalation/deintercalation, on the thickness direction of the electrode, the adhesiveness of the anode current collector and the layer containing the anode active material to each other is improved by the aforementioned constraint, and the surface roughness of the anode current collector is set within a specified range; thereby, the planar expansion of the layer containing the anode active material is suppressed by means of the strength of the anode current collector, which promotes the melt adhesion of the anode active material, so that the resistance increase rate can be further suppressed.

The stack may be constrained at a constraining pressure of at most 10 MPa after the initial charging step.

The step of storing the stack in a case provided with terminals necessary for a battery, such as electrodes, may be included after the initial charging step S12.

2. Solid-State Battery

An all-solid-state battery that is one aspect of the solid-state battery produced by the method of producing a solid-state battery according to the present disclosure includes the stack formed by stacking the cathode layer, the solid electrolyte layer, and the anode layer in this order. The proportion of the voids present in the anode layer in the stacking direction, in all the voids present in the anode layer can be more than 36vol%, and is more preferably at least 55vol%. The upper limit of this proportion is 100vol%.

Here, "voids in the stacking direction" mean the voids each of which has a major axis inclining at most 45° from the stacking direction and having a length of at least 0.5 $\mu$m, and has a minor axis having a length of at most 2 $\mu$m.

The method of calculating the proportion of the voids in the stacking direction, in all the voids present in the anode layer (longitudinal slitting rate) is, for example, as follows.

First, the stack is cut in the stacking direction, and the cross-sectional images of the anode layer are obtained with a scanning electron microscope. Among them, a cross-sectional image showing a predetermined range of the cross-section of the anode is used. In view of securing the accuracy of the longitudinal slitting rate, a cross-sectional image showing at least a range 15 $\mu$m square of the cross section of the anode is used.

Next, the obtained cross-sectional image is analyzed, so that the proportion of the volume of the voids in the image (that is, porosity) is calculated. Among these voids, the voids each of which has a major axis inclining at least 45° from the horizontal plane and having a length of at least 0.5 $\mu$m, and each of which has a minor axis having a length of at most 2 $\mu$m are defined as longitudinal slits when the horizontal plane is the plane viewed from the top or bottom face with respect to the stacking direction. The proportion of the volume of the voids in the stacking direction, in the volume of all the voids is calculated as the longitudinal slitting rate (vol%).

The voids in the stacking direction are more difficult to block electron paths or ion paths in the anode layer than the other voids. Therefore, the all-solid-state battery according to the present disclosure, which includes the anode layer having a proportion of the voids in the stacking direction of more than 36vol% which is preferably at least 55vol%, is capable of suppressing a rise in the resistance increase rate. In particular, even when silicon, which tends to expand and contract more, is used, the resistance increase during the cycle can be suppressed.

3. Tests

3.1. Tests on Constraint Force

3.1.1. Preparing Stack

Each of stacks for evaluation relating to tests A1 to A7 and B1 to B5 was prepared as follows.

3.1.1a. Preparing Cathode Layer

A cathode slurry was prepared by stirring a cathode mixture containing an NCA-based cathode active material ($LiNi_{0.8}Co_{0.15}Al_{0.05}O_2$), a sulfide-based solid electrolyte ($Li_2S$-$P_2S_5$), a vapor grown carbon fiber, a PVdF-based binder, and butyl butyrate as raw materials by means of an ultrasonic dispersive device. Here, the weight ratio of NCA-based cathode active material: sulfide-based solid electrolyte:vapor grown carbon fiber:PVdF-based binder in the cathode slurry was adjusted to be 88.2:9.8:1.3:0.7. A cathode layer was obtained by coating a cathode current collector (A1 foil) with the foregoing cathode slurry according to a blade method, and drying the resultant on a hot plate at 100°C for 30 minutes.

3.1.1b. Preparing Anode Layer Including Anode Mixture Layer

An anode slurry was prepared by stirring an anode mixture containing a powder Si particle, a sulfide-based solid electrolyte ($Li_2S$-$P_2S_5$), a vapor grown carbon fiber, a PVdF-based binder, and butyl butyrate as raw materials by means of an ultrasonic dispersive device. The particle diameter of the Si particle was as shown in tables 2 to 4. Here, the weight ratio of powder Si particle: sulfide-based solid electrolyte:vapor grown carbon fiber:PVdF-based binder in the anode slurry was adjusted to be 47.0:44.6:7.0:1.4. An anode layer was obtained by coating an anode current collector (Ni foil) with the foregoing anode slurry according to a blade method, and drying the resultant on a hot plate at 100°C for 30 minutes.

3.1.1c. Preparing Anode Layer Including Anode Thin Film Layer

As an anode current collector, an electrolytic copper foil surface-roughened by precipitating copper according to an electrolytic method was used. An anode layer was obtained by forming a Si thin film over the surface of the anode current collector by means of an RF sputtering apparatus. Here, table 1 shows the conditions for forming the Si thin film. In table 1, the thickness of the Si thin film is calculated by calculating the surface density of the Si by inductively coupled plasma emission spectrometry, and dividing the value of this surface density by the true density of the Si ($2.3 \text{ gcm}^{-3}$). The content of Si in the anode layer was at least 95mass%.

Table 1

| Power source | Power (W) | Ar flow rate (sccm) | Film forming time (min) | Pressure before film formation (Pa) | Pressure when film was formed (Pa) | Surface density of anode thin film layer ($\text{mgcm}^{-2}$) | Thickness of anode thin film layer ($\mu\text{m}$) |
|---|---|---|---|---|---|---|---|
| RF | 200 | 90 | 934 | $1.0\times10^{-3}$ | $2.4\times10^{-1}$ | 1.8 | 7.8 |

3.1.1d. Preparing Solid Electrolyte Layer

A solid electrolyte slurry was prepared by stirring a solid electrolyte mixture containing a sulfide-based solid electrolyte ($Li_2S-P_2S_5$), a PVdF-based binder, and butyl butyrate as raw materials by means of an ultrasonic dispersive device. Here, the weight ratio of sulfide-based solid electrolyte:PVdF-based binder in the solid electrolyte slurry was adjusted to be 99.6:0.4. A removable solid electrolyte layer was obtained by coating an Al foil with the foregoing solid electrolyte slurry according to a blade method, and drying the resultant on a hot plate at 100°C for 30 minutes.

3.1.1e. Preparing Stack

The prepared cathode layer and solid electrolyte layer were stacked, so that the faces of the mixtures faced each other. The resultant was pressed by means of a roll press at a press pressure of 50 kN/cm at 160°C. Thereafter, the Al foil of the solid electrolyte layer was removed. From the resultant, a cathode stack having a size of 1 cm$^2$ was stamped out to be obtained.

The prepared anode layer and solid electrolyte layer were stacked, so that the faces of the mixtures, or the faces of the thin film and the mixture face each other. The resultant was pressed by means of a roll press at a press pressure of 50 kN/cm at 160°C. Thereafter, an anode stack A was obtained by removing the Al foil of the solid electrolyte layer. Another solid electrolyte layer was further stacked on the anode stack A on the solid electrolyte layer side, so that the faces of the mixtures faced each other. This resultant stack was temporarily pressed by means of a planar uniaxial press at a press pressure of 100 MPa at 25°C. Thereafter, the Al foil of the other solid electrolyte layer was removed. From the resultant, an anode stack B having a size of 1.08 cm$^2$ was stamped out to be obtained.

The prepared cathode stack and anode stack B were stacked, so that the faces of the mixtures faced each other. This resultant stack was pressed by means of a planar uniaxial press at a press pressure of 200 MPa at 120°C, and thus, the stack for evaluation was obtained. Here, the capacity ratio of the anode layer to the cathode layer in the prepared stack is as shown in tables 2 to 5.

3.1.2. Evaluation of Initial Charging

The stack obtained as described above was held between two constraint plates. These two constraint plates were fastened with a fastener at a constraining pressure at the beginning of the charging shown in tables 2 to 5, so that the distance between the two constraint plates was fixed. Next, the stack was subjected to constant current charging at 1/10 C up to 4.2 V, and thereafter, to constant voltage charging at 4.2 V up to the end current of 1/100 C. Then, the constraining pressure at the end of the charging was recorded. Further, constant current discharging was performed at 1/10 C up to 2.5 V, and thereafter, constant voltage discharging was performed at 2.5 V up to the end current of 1/100 C.

3.1.3. Evaluation of Longitudinal Slitting Rate

The longitudinal slitting rate was evaluated concerning each of tests A1, A3, A7, B1 and B5. Specifically, first, the stack after the evaluation of the initial charging was disassembled, and the disassembled stack was cut in the stacking direction by means of ion milling equipment. Next, the cross-sectional image of the anode layer of the cut stack in the range 15 $\mu$m square was obtained with a scanning electron microscope. The obtained cross-sectional image was classified by color into the four elements of the anode active material, the solid electrolyte, the carbon fiber, and the voids by image analysis, and the proportion of the volume of the voids in the image (that is, porosity) was calculated.

Among these voids, the voids each of which had a major axis inclining at least 45° from the horizontal plane and having a length of at least 0.5 $\mu$m, and each of which had a minor axis having a length of at most 2 $\mu$m were defined as longitudinal slits when the horizontal plane was the plane viewed from the top or bottom face with respect to the stacking direction. The proportion of the volume of the voids in the stacking direction, in the volume of all the voids was calculated as the longitudinal slitting rate (vol%). The results are shown in tables 2 and 5. Fig. 2 shows the cross-sectional image of the anode including the anode mixture layer (test A1). Fig. 3 shows the cross-sectional image of the anode including the anode thin film layer (test A7).

3.1.4. Evaluation of Resistance Increase Rate

The constraint of the stack after the evaluation of the initial charging was released once. Then, the stack was again constrained at a constraining pressure of 10 MPa, so that the distance between the two constraint plates was fixed. Next, the charge conditions were adjusted by subjecting the stack to constant current charging at 1/10 C up to 3.0 V, and thereafter, to constant voltage charging at 3.0 V up to the end current of 1/100 C. A current of 8.2 mAh/cm$^2$ was passed for 10 seconds through the stack after the charge conditions were adjusted. The resistance was obtained by dividing, by the current value, the difference between the voltages before and after the passage of the current. The value of this resistance was defined as the initial resistance.
A durability test was done on the stack after the initial resistance was measured: in the durability test, a charge/discharge cycle was repeated 300 times under the following conditions:

    charge conditions: constant current charging at 1 C up to 4.2 V
    discharge conditions: constant current discharging at 1 C up to 2.5 V

The charge conditions were adjusted by subjecting the stack after the durability test to constant current charging at 1/10 C up to 3.0 V, and thereafter, to constant voltage charging at 3.0 V up to the end current of 1/100 C. A current of 8.2 mAh/cm$^2$ was passed for 10 seconds through the stack after the charge conditions were adjusted. The resistance was obtained by dividing, by the current value, the difference between the voltages before and after the passage of the current. The value of this resistance was defined as the resistance after long-term use.
Based on the obtained initial resistance and resistance after long-term use, the resistance increase rate was calculated from the following formula. Here, in the test on the stack with the anode layer including the anode mixture layer, the relative resistance increase rate was calculated on the basis (100%) of the resistance increase rate of test B1; and in the test on the stack with the anode layer including the anode thin film layer, the relative resistance increase rate was calculated on the basis (100%) of the resistance increase rate of test B5. A smaller relative resistance increase rate represents that the deterioration of the battery stack due to long-term use was suppressed more. The results are shown in tables 2 to 5.

$$\text{resistance increase rate (\%)} = \text{resistance after long-term use } (\Omega)/\text{initial resistance } (\Omega) \times 100$$

Table 2

| | Particle diameter of anode active material ($\mu$m) | Constraining pressure at beginning of charging (MPa) | Constraining pressure at end of charging (MPa) | Capacity ratio | Longitudinal slitting rate (%) | Relative resistance increase rate (%) |
|---|---|---|---|---|---|---|
| Test A1 | 0.4 | 30 | 40 | 3 | 55 | 69 |
| Test A2 | 0.4 | 40 | 50 | 3 | - | 72 |
| Test A3 | 0.4 | 70 | 80 | 3 | 63 | 76 |
| Test B1 | 0.4 | 10 | 20 | 3 | 36 | 100 |
| Test B2 | 0.4 | 20 | 30 | 3 | - | 92 |

Table 3

| | Particle diameter of anode active material (μm) | Constraining pressure at beginning of charging (MPa) | Constraining pressure at end of charging (MPa) | Capacity ratio | Relative resistance increase rate (%) |
|---|---|---|---|---|---|
| Test A1 | 0.4 | 30 | 40 | 3 | 69 |
| Test A4 | 0.4 | 30 | 40 | 2 | 67 |
| Test A5 | 0.4 | 30 | 40 | 5 | 69 |
| Test B3 | 0.4 | 30 | 40 | 10 | 102 |

Table 4

| | Particle diameter of anode active material (μm) | Constraining pressure at beginning of charging (MPa) | Constraining pressure at end of charging (MPa) | Capacity ratio | Relative resistance increase rate (%) |
|---|---|---|---|---|---|
| Test A1 | 0.4 | 30 | 40 | 3 | 69 |
| Test A6 | 1 | 30 | 40 | 3 | 74 |
| Test B4 | 2 | 30 | 40 | 3 | 96 |

Table 5

| | Thickness of anode thin film layer (μm) | Constraining pressure at beginning of charging (MPa) | Constraining pressure at end of charging (MPa) | Capacity ratio | Longitudinal slitting rate (%) | Relative resistance increase rate (%) |
|---|---|---|---|---|---|---|
| Test A7 | 7.8 | 30 | 50 | 1.2 | 100 | 51 |
| Test B5 | 7.8 | 10 | 30 | 1.2 | 40 | 100 |

3.1.5. Results

Tables 2 to 4 show the results of the test examples of the stacks each including the anode layer including the anode mixture layer.

Table 2 shows every test example of changing the constraining pressure at the beginning of the charging and the constraining pressure at the end of the charging while fixing the particle diameter of the anode active material, and the capacity ratio of the stack. Based on the results in table 2, Fig. 4 shows the relation between the constraining pressure at the end of the initial charging, and the relative resistance increase rate. From table 2 and Fig. 4, it is confirmed that the longitudinal slitting rate was higher and the relative resistance increase rate was lower in tests A1 to A3, which were done under the conditions that the constraining pressure at the beginning of the charging should be at least 30 MPa and the constraining pressure at the end of the charging should be at least 40 MPa, than tests B 1 and B2, which were done at a constraining pressure of 10 MPa to 20 MPa, which is generally applied for the initial charging. From the results, it can be seen that in tests A1 to A3, the deterioration of the stack due to the durability test was suppressed as compared with that in tests B 1 and B2.

Table 3 shows the results when the particle diameter of the anode active material, the constraining pressure at the beginning of the charging, and the constraining pressure at the end of the charging were fixed while the capacity ratio of the stack was changed. From table 3, it can be seen that when the capacity ratio was at most 5, the relative resistance increase rate was lower, that is, the deterioration of the stack due to the durability test was suppressed more. Li was intercalated into the Si used for the alloy-based anode active material, and thereby, the softness of this Si changed. Therefore, the reason why the relative resistance increase rate was lower when the capacity ratio was at most 5 is considered to be because the capacity ratio of at most 5 allowed the softness to be such that Li and the Si easily bound to each other in the charging.

Table 4 shows the results when the capacity ratio of the stack, the constraining pressure at the beginning of the charging, and the constraining pressure at the end of the charging were fixed while the particle diameter of the anode active material was changed. From table 4, it can be seen that under the condition that the particle diameter of the anode active material should be at most 1 $\mu$m, the relative resistance increase rate was lower, that is, the deterioration of the battery stack due to long-term use was suppressed. This is because the smaller the particle diameter of the anode active material is, the more the interfaces between the particles of the anode active material in the anode is, and shows that when an active material having a particle diameter of at most 1 $\mu$m is used, the effect of reducing the inert interfaces due to the melt adhesion of the particles of the active material to each other is large.

Table 5 shows the results of the test examples of the stacks each with the anode layer including the anode thin film layer. From table 5, it is confirmed that even when the initial charging was performed with the foregoing stack under the conditions that the constraining pressure at the beginning of the charging should be 30 MPa and the constraining pressure at the end of the charging should be 50 MPa, the longitudinal slitting rate was higher, and the relative resistance increase rate was lower, and it is found that the deterioration of the battery stack due to the durability test was suppressed. In particular, it can be seen that in test A7, the longitudinal slitting rate was 100%.

3.2. Tests on Surface Roughness of Anode Current Collector Layer

3.2.1. Preparing Stack

Each of stacks for evaluation relating to tests A11 to A16 and B11 to B14 was prepared as follows.

3.2.1a. Preparing Cathode Layer

Each cathode layer was prepared in the same manner as in tests A1 to A7 and B 1 to B5.

3.2.1b. Preparing Anode Layer (Anode Layer Including Anode Mixture Layer)

An anode slurry was prepared by stirring an anode mixture containing a powder Si particle, a sulfide-based solid electrolyte ($Li_2S$-$P_2S_5$), a vapor grown carbon fiber, a PVdF-based binder, and butyl butyrate as raw materials by means of an ultrasonic dispersive device. Here, the weight ratio of powder Si particle:sulfide-based solid electrolyte:vapor grown carbon fiber:PVdF-based binder in the anode slurry was adjusted to be 46.8:44.4:7.0:1.4. An anode layer including an anode mixture layer was obtained by coating a metal foil having Rz shown in tables 6 and 7 as an anode current collector with the foregoing anode slurry according to a blade method, and drying the resultant on a hot plate at 100°C for 30 minutes.

3.2.1c. Preparing Anode Layer (Anode Layer Including Anode Thin Film Layer)

As an anode current collector, a Ni foil having Rz shown in table 8 was used. An anode layer was obtained by forming a Si thin film over the surface of the anode current collector by means of an RF sputtering apparatus. The conditions for forming the Si thin film were the same as in table 1.

3.2.1d. Preparing Solid Electrolyte Layer

Each solid electrolyte layer was prepared in the same manner as in tests A1 to A7 and B1 to B5.

3.2.1e. Preparing Stack

Each stack was also prepared in the same manner as in tests A1 to A7 and B1 to B5.

3.2.2. Evaluation of Initial Charging

The battery stack obtained as described above was held between two constraint plates. These two constraint plates were fastened with a fastener at a constraining pressure at the beginning of the charging shown in tables 6 to 8, so that the distance between the two constraint plates was fixed. Next, the constrained stack was subjected to constant current charging at 1/10 C up to 4.05 V, and thereafter, to constant voltage charging at 4.05 V up to the end current of 1/100 C. Then, the constraining pressure at the end of the charging was recorded. Further, constant current discharging was performed at 1/10 C up to 2.5 V, and thereafter, constant voltage discharging was performed at 2.5 V up to the end current of 1/100 C.

3.2.3. Evaluation of Resistance Increase Rate

The constraint of the stack after the evaluation of the initial charging was released once. Then, the stack was again constrained at a constraining pressure of 10 MPa, so that the distance between the two constraint plates was fixed. Next, the charge conditions were adjusted by subjecting the stack to constant current charging at 1/10 C up to 3.0 V, and thereafter, to constant voltage charging at 3.0 V up to the end current of 1/100 C. A current of 8.2 mAh/cm$^2$ was passed for 10 seconds through the stack after the charge conditions were adjusted. The resistance was obtained by dividing, by the current value, the difference between the voltages before and after the passage of the current. The value of this resistance was defined as the initial resistance.

A durability test was done on the stack after the initial resistance was measured: in the durability test, a charge/discharge cycle was repeated 300 times under the following conditions:

charging for long-term use: constant current charging at 1 C up to 4.05 V
discharging for long-term use: constant current discharging at 1 C up to 2.5 V

The charge conditions were adjusted by subjecting the stack after the durability test to constant current charging at 1/10 C up to 3.0 V, and thereafter, to constant voltage charging at 3.0 V up to the end current of 1/100 C. A current of 8.2 mAh/cm$^2$ was passed for 10 seconds through the stack after the charge conditions were adjusted. The resistance was obtained by dividing, by the current value, the difference between the voltages before and after the passage of the current. The value of this resistance was defined as the resistance after long-term use.

Based on the obtained initial resistance and resistance after long-term use, the resistance increase rate was calculated from the following formula. Here, in the test on the stack with the anode layer including the anode mixture layer, the relative resistance increase rate was calculated on the basis (100%) of the resistance increase rate of test A11; and in the test on the stack with the anode layer including the anode thin film layer, the relative resistance increase rate was calculated on the basis (100%) of the resistance increase rate of test A16. A smaller relative resistance increase rate represents that the deterioration of the battery stack due to long-term use was suppressed more. The results are shown in tables 6 to 8.

$$\text{resistance increase rate } (\%) = \text{resistance after long-term use } (\Omega)/\text{initial resistance } (\Omega) \times 100$$

Table 6

| | | Anode current collector | | Constraining pressure at beginning of charging (MPa) | Constraining pressure at end of charging (MPa) | Capacity ratio | Relative resistance increase rate (%) |
|---|---|---|---|---|---|---|---|
| | | Material | Surface roughness Rz ($\mu$m) | | | | |
| Test A11 | | Ni | 0.8 | 30 | 40 | 3 | 100 |
| Test A12 | | Ni | 2.4 | 30 | 40 | 3 | 94 |
| Test A13 | | Ni | 4.0 | 30 | 40 | 3 | 102 |
| Test B11 | | Ni | 0.2 | 30 | 40 | 3 | 138 |

(continued)

|  | Anode current collector | | Constraining pressure at beginning of charging (MPa) | Constraining pressure at end of charging (MPa) | Capacity ratio | Relative resistance increase rate (%) |
|---|---|---|---|---|---|---|
|  | Material | Surface roughness Rz ($\mu$m) | | | | |
| Test B12 | Ni | 5.2 | 30 | 40 | 3 | 122 |
| Test B13 | Ni | 2.4 | 10 | 20 | 3 | 136 |

Table 7

|  | Anode current collector | | Constraining pressure at beginning of charging (MPa) | Constraining pressure at end of charging (MPa) | Capacity ratio | Relative resistance increase rate (%) |
|---|---|---|---|---|---|---|
|  | Material | Surface roughness Rz ($\mu$m) | | | | |
| Test A14 | Cu | 2.4 | 30 | 40 | 3 | 95 |
| Test A15 | SUS | 2.4 | 30 | 40 | 3 | 94 |

Table 8

|  | Anode current collector | | Thin film of anode active material ($\mu$m) | Constraining pressure at beginning of charging (MPa) | Constraining pressure at end of charging (MPa) | Capacity ratio | Relative resistance increase rate (%) |
|---|---|---|---|---|---|---|---|
|  | Material | Surface roughness Rz ($\mu$m) | | | | | |
| Test A16 | Ni | 2.4 | 8.0 | 30 | 40 | 1.2 | 100 |
| Test B14 | Ni | 0.2 | 8.0 | 30 | 40 | 1.2 | 149 |

3.2.4. Results

3.2.4a. Relation between Surface Roughness of Anode Current Collector and Relative Resistance Increase Rate

Fig. 5 is a graph in which concerning tests A11 to A13, B11 and B12 in table 6, the horizontal axis shows Rz, and the vertical axis shows the relative resistance increase rate. From tests A11 to A13, B11 and B12 in table 6, it can be seen that when the initial charging was performed under the conditions that the surface roughness Rz of the anode current collector should be 0.8 $\mu$m to 4.0 $\mu$m, the constraining pressure at the beginning of the charging should be 30 MPa, and the constraining pressure at the end of the charging should be 40 MPa, the relative resistance increase rate was lower, that is, the deterioration of the battery stack due to long-term use was suppressed. This is considered to be because the adhesiveness of the anode current collector and the anode mixture to each other was improved, so that the planar expansion of the anode active material was suppressed by means of the strength of the anode current collector, which promotes the melt adhesion of the active material in the thickness direction, which enables slits in the electrode following the contraction of the active material to be controlled in the longitudinal direction.

When Rz was less than 0.8 $\mu$m, the adhesiveness of the anode mixture and the anode current collector to each other was worse, which caused the anode mixture and the anode current collector to be released from each other at the interface therebetween, which prevented the planar expansion of the anode mixture from being suppressed, so that the slits could not be controlled. Thus, the resistance increase rate was considered to be higher.

When Rz was more than 4.0 μm, the difference between the valley and the peak on the roughened portion of the anode current collector in thickness was large, which led to the difference between the local opposing capacity rate at the valley and the local opposing capacity rate at the peak to cause an unstable reaction. Thus, the resistance increase rate was considered to be also higher. The surface roughness Rz of the anode current collector of more than 4.0 μm is not preferable either in view of the strength of the anode current collector, and in view of the volume density because it is inevitably necessary to increase the thickness of the anode current collector.

From the results of, for example, tests A12 and B13 shown in table 6, it can be seen that the relative resistance increase rate was not lower when the constraining pressure at the beginning of the charging was not at least 30 MPa, and the constraining pressure at the end of the charging was not at least 40 MPa even when the surface roughness Rz of the anode current collector was 0.8 μm to 4.0 μm.

3.2.4b. Relation between Type of Anode Current Collector and Relative Resistance Increase Rate

From tests A14 and A15 shown in table 7, it can be seen that when the surface roughness Rz of the anode current collector was 0.8 μm to 4.0 μm, the constraining pressure at the beginning of the charging was 30 MPa, and the constraining pressure at the end of the charging was 40 MPa, the same effect of suppressing the deterioration of the battery stack due to long-term use was produced regardless of the metal of the anode current collector.

3.2.4c. Case of Anode Layer Including Anode Thin Film Layer

From tests A16 and B14 shown in table 8, it can be seen that when the initial charging was performed when the surface roughness Rz of the anode current collector was 0.8 μm to 4.0 μm, the constraining pressure at the beginning of the charging was at least 30 MPa, and the constraining pressure at the end of the charging was at least 40 MPa in the same manner as in the case of the mixture even when the anode layer included the thin film, the relative resistance increase rate was lower, that is, the deterioration of the battery stack due to long-term use was suppressed.

**Claims**

1. A solid-state battery that includes a stack including a cathode layer, a solid electrolyte layer, and an anode layer containing an alloy-based anode active material, wherein
   a proportion of voids in the anode layer in a stacking direction, in all voids in the anode layer is more than 36vol%.

2. The solid-state battery according to claim 1, wherein the proportion of the voids in the stacking direction, in all the voids is 55vol% to 100vol%.

3. The solid-state battery according to claim 1 or 2, wherein the alloy-based anode active material contains silicon.

4. The solid-state battery according to any one of claims 1 to 3, wherein the silicon is a particle.

5. The solid-state battery according to claim 4, wherein the particle of the silicon has a particle diameter D50 of at most 1 μm.

6. The solid-state battery according to any one of claims 1 to 3, wherein the silicon is a thin film.

7. The solid-state battery according to any one of claims 1 to 6, wherein the solid electrolyte layer contains a sulfide solid electrolyte.

8. The solid-state battery according to any one of claims 1 to 7, wherein

   the anode layer further includes an anode current collector, and
   the anode current collector has surface roughness Rz of 0.8 μm to 4.0 μm.

9. A method of producing a solid-state battery, the method comprising:

   preparing a stack including a cathode layer, a solid electrolyte layer, and an anode layer; and
   performing initial charging in which the stack is constrained in a stacking direction, and the constrained stack is subjected to initial constant current/constant voltage charging, wherein

in said performing initial charging, a constraining pressure for the stack at a beginning of the charging is at least 30 MPa, and a constraining pressure for the stack at an end of the charging is at least 40 MPa.

10. The method according to claim 9, wherein after said performing initial charging, the stack is constrained at a constraining pressure of at most 10 MPa.

11. The method according to claim 9 or 10, wherein

the anode layer contains an alloy-based anode active material, and
the alloy-based anode active material contains silicon.

12. The method according to any one of claims 9 to 11, wherein the silicon is a particle.

13. The method according to claim 12, wherein the particle of the silicon has a particle diameter D50 of at most 1 $\mu$m.

14. The method according to any one of claims 9 to 11, wherein the silicon is a thin film.

15. The method according to any one of claims 9 to 14, wherein the solid electrolyte layer contains a sulfide solid electrolyte.

16. The method according to any one of claims 9 to 15, wherein

the anode layer further includes an anode current collector, and
the anode current collector has surface roughness Rz of 0.8 $\mu$m to 4.0 $\mu$m.

Fig. 1

S10

START

S11 | Preparing step

S12 | Initial charging step

END

Fig. 2

SU8220 2.0kV x5.00k HA(T)    10.0μm

Fig. 3

Fig. 4

Constraining pressure at end of initial charging [MPa]

Fig. 5

## INTERNATIONAL SEARCH REPORT

International application No.

**PCT/JP2021/046318**

### A. CLASSIFICATION OF SUBJECT MATTER

*H01M 4/70*(2006.01)i; *H01M 10/0562*(2010.01)i; *H01M 10/0585*(2010.01)i
FI:   H01M10/0585; H01M10/0562; H01M4/70 A

According to International Patent Classification (IPC) or to both national classification and IPC

### B. FIELDS SEARCHED

Minimum documentation searched (classification system followed by classification symbols)

H01M4/70; H01M10/0562; H01M10/0585

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-192338 A (TOYOTA MOTOR CORP.) 31 October 2019 (2019-10-31) paragraphs [0016]-[0028], [0038]-[0042], fig. 1-4 | 1-4, 6-7 |
| Y |  | 5, 8 |
| X | JP 2014-107163 A (TOYOTA MOTOR CORP.) 09 June 2014 (2014-06-09) paragraphs [0013]-[0016], [0021]-[0023], [0035], fig. 2 | 1-4, 7 |
| Y |  | 5, 8 |
| X | JP 2019-91547 A (TOYOTA MOTOR CORP.) 13 June 2019 (2019-06-13) paragraphs [0063]-[0094], example 4 | 1-4, 7, 9-12, 15 |
| Y |  | 5-6, 8, 13-14, 16 |
| Y | JP 2020-177904 A (TOYOTA MOTOR CORP.) 29 October 2020 (2020-10-29) paragraphs [0017]-[0056] | 5, 8, 13, 16 |
| Y | JP 2006-155959 A (SONY CORP.) 15 June 2006 (2006-06-15) paragraphs [0011]-[0050], fig. 1-4 | 6, 8, 14, 16 |
| A | JP 2019-192563 A (TOYOTA MOTOR CORP.) 31 October 2019 (2019-10-31) | 1-16 |

☑ Further documents are listed in the continuation of Box C.      ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 March 2022** | **22 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |  |
|  | Telephone No. |

Form PCT/ISA/210 (second sheet) (January 2015)

**EP 4 266 430 A1**

<table>
<tr><td colspan="2" align="center">INTERNATIONAL SEARCH REPORT</td><td>International application No.<br>**PCT/JP2021/046318**</td></tr>
</table>

| C. | DOCUMENTS CONSIDERED TO BE RELEVANT | |
|---|---|---|
| Category* | Citation of document, with indication, where appropriate, of the relevant passages | Relevant to claim No. |
| A | JP 2005-285651 A (SANYO ELECTRIC CO., LTD.) 13 October 2005 (2005-10-13) | 1-16 |
| A | JP 5557471 B2 (HITACHI ZOSEN CORP.) 13 June 2014 (2014-06-13) | 1-16 |
| A | JP 2016-18704 A (TOYOTA MOTOR CORP.) 01 February 2016 (2016-02-01) | 1-16 |
| A | US 2020/0136178 A1 (SAMSUNG ELECTRONLCS CO., LTD.) 30 April 2020 (2020-04-30) | 1-16 |

Form PCT/ISA/210 (second sheet) (January 2015)

22

**INTERNATIONAL SEARCH REPORT**
Information on patent family members

International application No.

**PCT/JP2021/046318**

| Patent document cited in search report | | | Publication date (day/month/year) | Patent family member(s) | Publication date (day/month/year) |
|---|---|---|---|---|---|
| JP | 2019-192338 | A | 31 October 2019 | EP 3557665 A1 paragraphs [0024]-[0056], [0084]-[0096], fig. 1-4 US 2019/0326645 A1 CN 110391451 A | |
| JP | 2014-107163 | A | 09 June 2014 | (Family: none) | |
| JP | 2019-91547 | A | 13 June 2019 | US 2019/0148765 A1 paragraphs [0116]-[0136], example 4 DE 102018219088 A1 CN 109768328 A KR 10-2019-0053803 A | |
| JP | 2020-177904 | A | 29 October 2020 | (Family: none) | |
| JP | 2006-155959 | A | 15 June 2006 | US 2006/0110662 A1 paragraphs [0025]-[0064], fig. 1-4 KR 10-2006-0058761 A CN 1783553 A | |
| JP | 2019-192563 | A | 31 October 2019 | US 2019/0334201 A1 CN 110416598 A | |
| JP | 2005-285651 | A | 13 October 2005 | US 2005/0221189 A1 KR 10-2006-0045145 A CN 1677717 A | |
| JP | 5557471 | B2 | 13 June 2014 | (Family: none) | |
| JP | 2016-18704 | A | 01 February 2016 | (Family: none) | |
| US | 2020/0136178 | A1 | 30 April 2020 | KR 10-2020-0050005 A CN 111129424 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016081790 A
- JP 2020107389 A
- JP 2010272210 A